# FASCICULE DE BREVET EUROPEEN

(11) **EP 2 034 134 B1**
(45) Date de publication et mention de la délivrance du brevet: **10.11.2010**
(21) Numéro de dépôt: 08163666.4
(22) Date de dépôt: 04.09.2008
(51) Int. Cl.: F01D 17/14, F03G 7/06

(54) **Dispositif d'actionnement, son utilisation et turboréacteur le comportant**
Vorrichtung zur Krafterzeugung, seine Verwendung, und Turbotriebwerk mit einer solchen Vorrichtung
Actuator device, use of it and turboengine comprising such a device

(30) Priorité: 05.09.2007 FR 0706212
(43) Date de publication de la demande: 11.03.2009
(73) Titulaire: SNECMA, 75015 Paris (FR)
(72) Inventeur: Mons, M. Claude, Marcel, 77176 Savigny le Temple (FR)
(74) Mandataire: Bloch & Bonnétat

(56) Documents cités:
- EP-A- 0 340 364
- EP-A- 0 902 179
- EP-A- 1 531 236
- JP-A- 62 007 980
- US-A- 6 151 897

## Description

La présente invention concerne le domaine des moteur à turbine à gaz et plus particulièrement celui des turboréacteurs double flux.

Elle se rapporte plus précisément à un dispositif d'actionnement d'un volet dans un turboréacteur, à l'utilisation d'un tel dispositif d'actionnement, et à un turboréacteur les comportant.

Un turboréacteur double flux d'un aéronef comporte, de manière connue, une veine primaire d'écoulement des gaz et une veine secondaire d'écoulement des gaz, qui sont séparées par un compartiment interveine d'un carter intermédiaire. Dans la veine primaire sont disposés, d'amont en aval dans le sens d'écoulement des gaz, un compresseur à basse pression et un compresseur à haute pression. L'air ainsi comprimé est amené à une chambre de combustion dans laquelle il est mélangé à du carburant sous pression qui est brûlé pour fournir, en aval de la chambre de combustion, de l'énergie à une turbine à haute pression qui entraîne le compresseur à haute pression, puis à une turbine à basse pression qui entraîne la soufflante et le compresseur à basse pression. Les gaz en sortie des turbines fournissent une poussée résiduelle qui s'ajoute à la poussée générée par les gaz circulant dans la veine secondaire afin d'assurer la propulsion de l'aéronef.

Dans certaines conditions de vol, la quantité d'air délivrée par le compresseur à basse pression est trop élevée pour garantir un fonctionnement correct du turboréacteur, aussi est-il nécessaire de dériver une partie de cet air de la veine primaire vers la veine secondaire, afin d'éviter l'apparition du phénomène dit de pompage, qui est dû au décollement des filets fluides le long des aubes et qui provoque une instabilité de l'écoulement. Ces ouvertures permettent aussi d'évacuer des corps étrangers tels que de la glace ou de l'eau ingérés par le moteur.

La dérivation d'air est encore appelée décharge d'air. Elle est effectuée au moyen de systèmes de décharge qui mettent en oeuvre des volets mobiles articulés et actionnés simultanément par un ensemble de moyens d'actionnement.

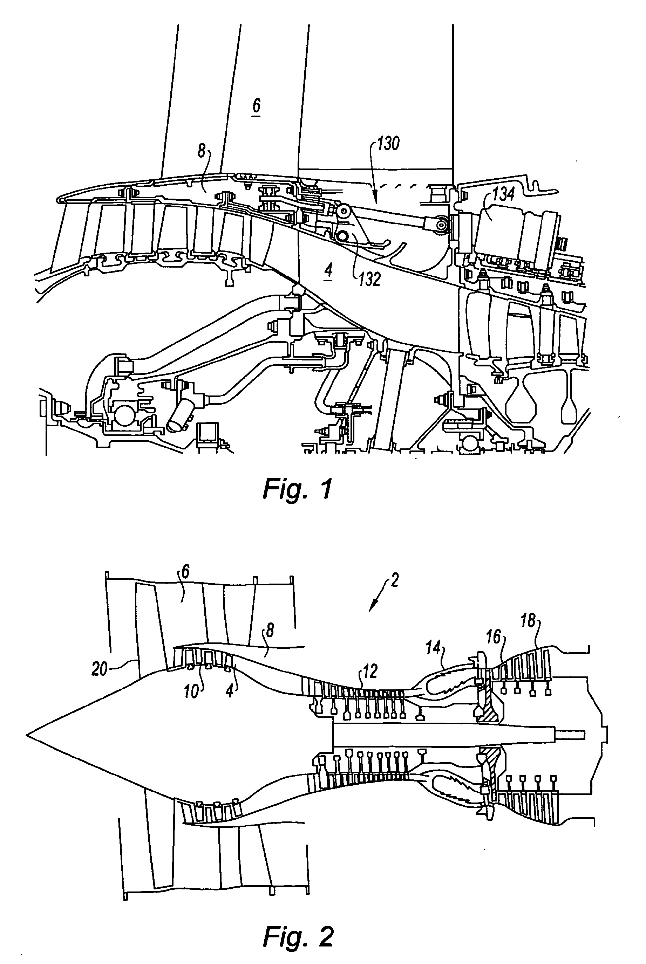

Un système de décharge conventionnel bien connu est représenté sur la figure 1. Le système de décharge 130 est disposé dans le compartiment interveine 8 qui sépare la veine primaire 4 de la veine secondaire 6. Il comporte des volets mobiles 132 actionnés par des vérins 134, qui sont généralement des vérins hydrauliques, mais peuvent être des vérins mécaniques tels que par exemple des vis sans fin. Un calculateur reçoit régulièrement des informations provenant de capteurs disposés en des points appropriés du turboréacteurs, comme par exemple des capteurs de température thermodynamique prise au niveau des distributeurs basse pression, quelquefois des capteurs de pression prise sur les aubages fixes de compresseurs par exemple et des capteurs de vitesse de rotation de rotors. Au moyen de ces informations, le calculateur détermine à chaque instant le cycle thermodynamique du turboréacteur. A l'approche de la zone de pompage ou lorsque les conditions d'apparition de celui-ci sont réunies, le calculateur déclenche la commande des vérins, qui actionnent les volets de décharge afin que se produise la décharge.

De tels dispositifs d'actionnement à vérins présentent des inconvénients. En effet, l'actionnement des vérins hydrauliques nécessite l'utilisation de fluides hydrauliques ou d'air comprimé à forte pression ainsi que les moyens de les acheminer depuis les pompes hydrauliques, tandis que l'actionnement des vérins mécaniques nécessite la présence de moteurs électriques d'entraînement ainsi que des générateurs de courant et des câblages. Tous ces systèmes annexes sont lourds et encombrants.

Un autre dispositif d'actionnement pour système de décharge connu est divulgué dans le document US 6 151 897. Il surmonte les inconvénients mentionnés ci-dessus par le fait que les volets de décharge ne sont pas actionnés par des vérins mais par des actionneurs en alliage à mémoire de forme, qui sont activés par de l'énergie thermique provenant de gaz à haute température ou de sources optiques. Dans le cas d'actionneurs activés par des gaz à haute température, la source de ces gaz à haute température peut être un compresseur ou une turbine du turboréacteur.

Les alliages à mémoire de forme sont bien connus pour leurs applications dans le domaine des actionneurs. Un alliage à mémoire de forme est capable de transformer une puissance thermique en travail mécanique. Lorsqu'il est chauffé, il est capable de restituer des déformations de l'ordre de 6 à 8 % et générer des efforts très importants. Par exemple, un objet en alliage à mémoire de forme est capable de soulever jusqu'à 1000 fois sa masse. Cet effort dû au déplacement peut être amplifié par des moyens mécaniques connus tels que des bras de levier ou des pistons.

Le fonctionnement des alliages à mémoire de forme est fondé sur des sollicitations mécaniques et thermiques du matériau. Il existe des alliages à mémoire de forme simple sens et des alliages à mémoire de forme double sens. Leurs comportements sont les suivants :
- pour un alliage à mémoire de forme simple sens :
   L'alliage se trouve initialement dans un état stable (état austénite) sous une forme stable ; puis on lui applique une contrainte à température constante, et il se retrouve déformé (état martensite) ; si on le chauffe, il se retrouve à nouveau dans l'état austénite, et retrouve alors sa forme initiale qu'il a conservée en mémoire ; un alliage à mémoire de forme simple sens possède donc un seul état stable, à haute température ;
- pour un alliage à mémoire de forme double sens :
   On « éduque » le matériau, en appliquant un grand nombre de fois un cycle thermique analogue au cycle décrit ci-dessus pour un alliage à mémoire de forme simple sens ; les contrainte externes appliquées sont alors remplacées par des contraintes internes au matériau ; si on le chauffe, il se retrouve dans un état stable à haute température (état austénite) dans lequel il présente une forme stable mémorisée ; si on le refroidit, il se retrouve dans un autre état stable à basse température (état martensite) dans lequel il présente une autre forme stable mémorisée ; un alliage à mémoire de forme double sens présente donc deux états stables, l'un à « haute température », et l'autre à « basse température ».

La présente invention a pour but de remédier aux inconvénients relatifs aux dispositifs d'actionnement mettant en oeuvre des vérins à haute pression, et propose un dispositif d'actionnement se présentant sous la forme d'un alliage à mémoire de forme, qui est amélioré par rapport au dispositif d'actionnement décrit dans le document US 6 151 897.

Selon un premier aspect, l'invention se rapporte à un dispositif d'actionnement pour actionner l'ouverture et la fermeture d'au moins un volet dans un moteur à turbine à gaz, qui comporte un actionneur réalisé en un alliage à mémoire de forme double sens possédant un premier état stable à une première température donnée dans lequel il actionne l'une parmi l'ouverture et la fermeture du volet, et un deuxième état stable à une deuxième température donnée dans lequel il actionne l'autre parmi l'ouverture et la fermeture du volet, et des moyens de régulation de température pour amener l'actionneur en alliage à mémoire de forme à la première température donnée ou à la deuxième température donnée, et a une vanne de régulation et un conduit de liaison raccordé à la vanne de régulation, ainsi qu'un premier conduit d'alimentation raccordé à une première source d'un fluide porté à la première température donnée et un deuxième conduit d'alimentation raccordé à une deuxième source d'un fluide porté à la deuxième température donnée, les premier et deuxième conduits d'alimentation étant raccordés à la vanne de régulation.

Le dispositif d'actionnement est utilisé dans un moteur comportant au moins un élément traversé par un écoulement de fluide et ayant une entrée au niveau de laquelle le fluide est à une température d'entrée donnée et une sortie au niveau de laquelle le fluide est à une température de sortie donnée. De préférence, la première source de fluide est constituée par l'une de l'entrée ou la sortie tandis que la deuxième source de fluide est constituée par l'autre de l'entrée et de la sortie.

Selon une forme de réalisation, l'élément est un compresseur du moteur, la première température donnée est la température de l'air à l'entrée d'un étage du compresseur et la deuxième température donnée est la température de l'air à la sortie de cet étage ou de l'étage suivant du compresseur.

Selon une autre forme de réalisation, l'élément est une turbine du moteur, la première température donnée est la température de l'air à la sortie de la turbine et la deuxième température donnée est la température de l'air à l'entrée de la turbine.

Le dispositif d'actionnement comporte, de préférence, au moins un logement calorifugé dans lequel est disposé l'actionneur en alliage à mémoire de forme. Le conduit de liaison débouche dans le logement calorifugé.

Le logement calorifugé est équipé avantageusement d'une fuite permettant son alimentation rapide en air chaud ou froid selon les besoins ; la température d'environnement « normale » de la pièce en alliage à mémoire correspond à la position fermée de la vanne . Lorsqu'on supprime l'apport d'air chaud ou froid, le ressort reprend la température ambiante et revient à la position d'équilibre de la vanne. La vitesse de réponse pour ce retour peut être avantageusement augmentée par un troisième prélèvement ou par l'emploi d'une écope située dans le flux primaire ou secondaire.

Selon un premier mode de réalisation du dispositif d'actionnement, celui-ci comporte un unique actionneur en alliage à mémoire de forme double sens qui passe à un premier état stable lorsqu'il est amené à une première température donnée et à un deuxième état stable lorsqu'il est amené à une deuxième température donnée.

Selon un deuxième mode de réalisation du dispositif d'actionnement, celui-ci comporte :
- un premier actionneur en alliage à mémoire de forme double sens qui passe à un premier état stable lorsqu'il est amené à sa première température donnée et qui passe à un deuxième état stable lorsqu'il est amené à sa deuxième température donnée,
- un deuxième actionneur en alliage à mémoire de forme double sens qui passe à un premier état stable lorsqu'il est amené à sa première température donnée et qui passe à un deuxième état stable lorsqu'il est amené à sa deuxième température donnée.

En particulier, la première température donnée du deuxième actionneur est sensiblement identique à la deuxième température donnée du premier actionneur et la deuxième température donnée du deuxième actionneur est sensiblement identique à la première température donnée du premier actionneur, de sorte que le premier état stable du deuxième actionneur est identique au deuxième état stable du premier actionneur et que le deuxième état stable du deuxième actionneur est identique au premier état stable du premier actionneur.

Selon une variante de réalisation l'actionneur est un ressort à spires. Selon une autre variante de réalisation, caractérisé en ce que l'actionneur est un ressort à lame.

L'invention se rapporte également à un turboréacteur comportant une veine primaire d'écoulement d'air et une veine secondaire d'écoulement d'air, un système de décharge comportant au moins un volet de décharge permettant de dériver de l'air de la veine primaire vers la veine secondaire, le système de décharge comportant au moins un dispositif d'actionnement selon l'invention, permettant d'ouvrir ou de fermer le système de décharge.

De manière connue, le turboréacteur comporte au moins un élément traversé par un écoulement de fluide et ayant une entrée au niveau de laquelle l'écoulement de fluide est à une température d'entrée donnée et une sortie au niveau de laquelle l'écoulement de fluide est à une température de sortie donnée. Cet élément est par exemple un compresseur du turboréacteur. Selon une forme particulière de réalisation, le système de décharge comporte au moins un dispositif d'actionnement comportant une vanne de régulation alimentée par un premier conduit d'alimentation raccordé à l'une parmi l'entrée et la sortie dudit élément et par un deuxième conduit d'alimentation raccordé à l'autre parmi et la sortie dudit élément, et un éventuel troisième prélèvement pour le retour rapide à l'équilibre et la vanne de régulation est commandée par un calculateur recevant des données relatives au cycle de fonctionnement du turboréacteur.

Un avantage du dispositif d'actionnement selon l'invention réside dans le fait qu'il est plus léger et plus compact que les dispositifs d'actionnement de la technique conventionnelle qui mettent en oeuvre des vérins et leurs accessoires. Il ne met pas en oeuvre de liquides sous haute pression nécessitant des précautions particulières ni des générateurs électriques de puissance.

L'invention sera mieux comprise à la lecture de la description détaillée qui va suivre de modes de réalisation particuliers, fournis à titre indicatif et nullement limitatif, et illustrés au moyen des dessins annexés, dans lesquels :
- la figure 1, déjà décrite, illustre, en coupe axiale, un dispositif de décharge ayant des vérins d'actionnement conformes à la technique conventionnelle ;
- la figure 2 représente, en coupe axiale et de manière schématique un turboréacteur sur lequel est implanté un système de décharge ayant au moins un dispositif d'actionnement conforme à l'invention ;
- les figures 3 et 4 représentent, de manière schématique, un premier mode de réalisation d'un dispositif d'actionnement conforme à l'invention et son fonctionnement ; et
- les figures 5 et 6 représentent, de manière schématique, un deuxième mode de réalisation d'un dispositif d'actionnement conforme à l'invention, et son fonctionnement.
- les figures 7 et 8 montrent un exemple d'incorporation d'un dispositif d'actionnement conforme à l'invention dans un turboréacteur à double flux.

Un turboréacteur double flux d'un aéronef est représenté à la figure 2. Le turboréacteur, désigné par le repère 2, comporte, de manière connue, une veine primaire d'écoulement des gaz 4 et une veine secondaire d'écoulement des gaz 6 séparées par un compartiment interveine 8. Le turboréacteur comporte également un compresseur à basse pression 10, un compresseur à haute pression 12, une chambre de combustion 14, une turbine à haute pression 16 qui entraîne le compresseur à haute pression 12, et une turbine à basse pression 18 qui entraîne une soufflante 20 et le compresseur à basse pression 10.

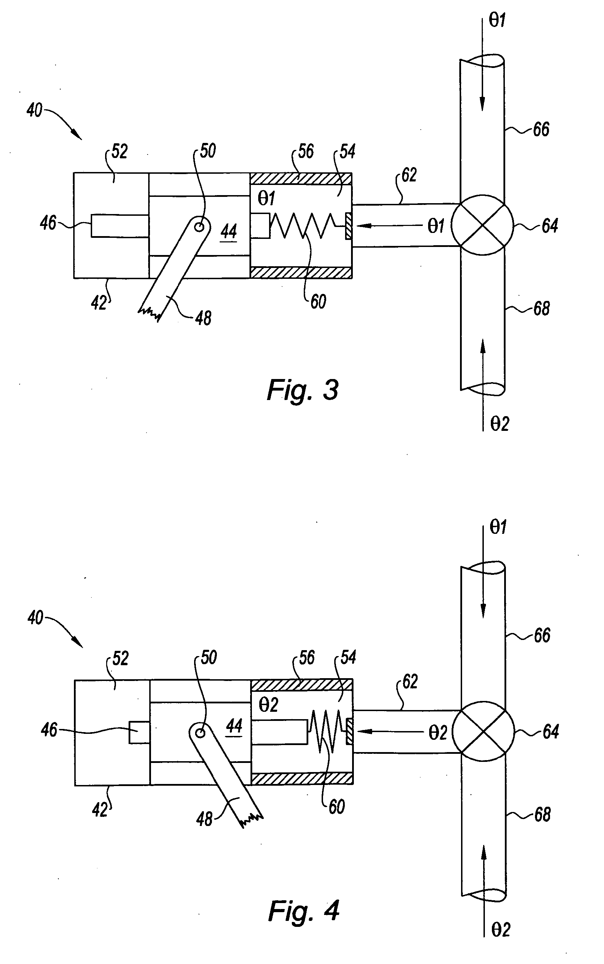

Les figures 3 et 4 illustrent, de manière schématique, le fonctionnement d'un dispositif d'actionnement 40 selon un premier mode de réalisation de l'invention. Le dispositif d'actionnement 40 comporte un boîtier 42 dans lequel est logé un mécanisme 44 comportant un piston 46 apte à effectuer un mouvement de translation entre une première position illustrée à la figure 3 et une deuxième position illustrée à la figure 4.

Le mécanisme 44 comporte également un maneton 48 mobile en rotation autour d'un axe 50 entre une première position illustrée à la figure 3 et une deuxième position illustrée à la figure 4. La rotation du maneton 48 autour de l'axe 50 est provoquée par le déplacement en translation du piston 46, au moyen d'un organe intermédiaire tel que par exemple un levier ou un piston hydraulique non représenté aux figures 3 et 4.

Le boîtier 42 comporte également deux logements 52, 54 disposés respectivement de chaque côté du mécanisme 44. Ces deux logements 52, 54 sont aptes à recevoir chacun une partie du piston 46 lors de son mouvement en translation. L'un 54 de ces logements 52, 54 comporte des moyens d'isolation thermique 56 tels que par exemple des revêtements fibreux (par exemple ceux connus sous la dénomination Fiberfrax), des céramiques ou des dépôts organiques chargés de billes creuses de manière à former un logement calorifugé 54. Ces logements calorifugés sont équipés de fuites calibrées permettant de faire circuler rapidement l'air de ventilation.

Le dispositif d'actionnement 40 comporte également un ressort à spires 60 qui actionne le piston 46 dans son mouvement en translation. Ce ressort à spires 60 est réalisé dans un alliage à mémoire de forme double sens. L'une des extrémités du ressort à spires 60 est fixée sur celle des deux extrémités du piston 46 qui se déplace dans le logement calorifugé 54, tandis que l'autre extrémité du ressort à spires 60 est fixée à une paroi du logement calorifugé 54 qui fait face à l'extrémité du piston 46. Le ressort à spires 60 est ainsi apte à se comprimer et à se dilater suivant une direction parallèle à celle de la trajectoire du piston 46.

Le dispositif d'actionnement 40 comporte également un conduit de liaison 62 qui débouche dans le logement calorifugé 54 et qui est raccordé à une vanne de régulation 64. Cette vanne de régulation 64 est alimentée par un premier conduit d'alimentation 66 et par un deuxième conduit d'alimentation 68. Le premier conduit d'alimentation 66 relie la vanne de régulation 64 à une première source de fluide (non représentée) qui fournit un fluide porté à une première température donnée θ1 tandis que le deuxième conduit d'alimentation 68 relie la vanne de régulation 64 à une deuxième source de fluide (non représentée) qui fournit un fluide à une deuxième température donnée θ2. Un conduit d'alimentation complémentaire ou des écopes permettant de stabiliser rapidement le système en position fermée peuvent être adjoints.

Les deux températures données θ1 et θ2 sont des températures différentes séparées par un intervalle de température d'au moins 40 degrés. De manière préférée, cet intervalle de température est compris entre 40 degrés et 80 degrés. De manière encore plus préférée, cet intervalle de température est supérieur à 120 degrés

Le fonctionnement du dispositif d'actionnement 40 selon le premier mode de réalisation est le suivant.

La vanne de régulation 64 peut recevoir un fluide à la première température donnée θ1, ce fluide provenant de la première source d'air (non représentée) par l'intermédiaire du premier conduit d'alimentation 66, ou bien elle peut recevoir un fluide à la deuxième température θ2 donnée provenant de la deuxième source de fluide (non représentée) par l'intermédiaire du deuxième conduit d'alimentation 68.

L'alimentation de la vanne de régulation 64 par l'un ou l'autre des deux conduits d'alimentation 66, 68 est commandée par un calculateur (non représenté) en fonction de paramètres du cycle thermodynamique du turboréacteur, qui sont fournis en continu au calculateur par l'intermédiaire de capteurs disposés de façon appropriée au sein du turboréacteur. Lorsque le cycle de fonctionnement du turboréacteur approche d'une zone critique dans laquelle pourrait se produire un phénomène de pompage, le calculateur commande l'alimentation de la vanne de régulation 64.

Le fluide à la température donnée θ1 (figure 3) ou θ2 (figure 4) qui alimente la vanne de régulation 64 est ensuite transporté par le conduit de liaison 62 jusqu'au logement calorifugé 54 contenant le ressort 60 réalisé en alliage à mémoire de forme double sens. Selon l'invention, cet alliage à mémoire de forme est sélectionné de telle façon qu'il se trouve dans son premier état stable lorsqu'il est porté à la première température donnée θ1 et qu'il se trouve dans son deuxième état stable lorsqu'il est porté à la deuxième température donnée θ2. Le premier état stable de l'alliage à mémoire de forme constitutif du ressort 60 correspond à un état dans lequel le ressort 60 est détendu (figure 3), tandis que son deuxième état stable correspond à un état dans lequel le ressort 60 est comprimé (figure 4).

Ainsi, dans une première configuration (figure 3), le logement calorifugé 54 reçoit un fluide à la première température donnée θ1. Le ressort 60 en alliage à mémoire de forme double sens est alors automatiquement porté à la première température donnée θ1, et s'y maintient puisque le logement 54 est calorifugé. Le ressort 60 se place dans son premier état stable, qui correspond à une dilatation sur l'exemple illustré, et s'y maintient puisque le logement 54 est calorifugé. En se dilatant, le ressort 60 pousse le piston 46 qui entraîne le maneton 48 en rotation jusqu'à une première position extrême.

De manière symétrique, dans une deuxième configuration (figure 4), le logement calorifugé 54 reçoit un fluide à la deuxième température donnée θ2. Le ressort 60 en alliage à mémoire de forme double sens est alors automatiquement porté à la deuxième température donnée θ2, et s'y maintient puisque le logement 54 est calorifugé. Le ressort 60 se place dans son deuxième état stable, qui correspond à une compression sur l'exemple illustré, et s'y maintient puisque le logement 54 est calorifugé. En se comprimant, le ressort 60 tire le piston 46 qui entraîne le maneton 48 en rotation jusqu'à une deuxième position extrême.

L'extrémité du maneton 48 qui n'est pas représentée aux figures 3 et 4 est reliée à un volet (non représenté) ou à un mécanisme (non représenté) lui-même relié à un ou plusieurs volet(s) (non représenté(s)). L'une des deux positions extrêmes du maneton 48 correspond à l'une des deux positions ouverte ou fermée du volet, tandis que l'autre des deux positions extrêmes du maneton 48 correspond à l'autre des deux positions ouverte ou fermée dudit volet.

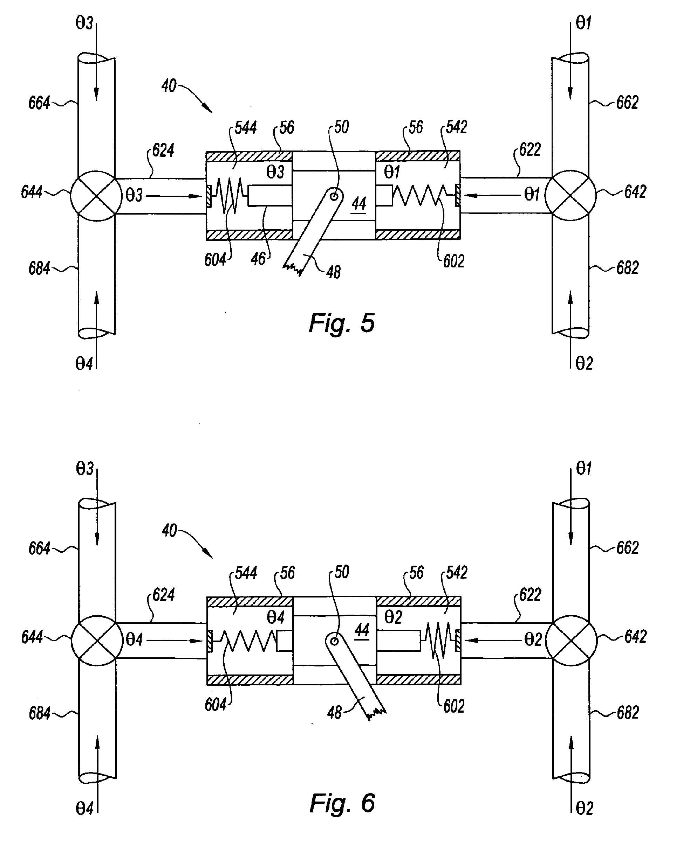

Les figures 5 et 6 illustrent, de manière schématique, le fonctionnement d'un dispositif d'actionnement 40 selon un deuxième mode de réalisation de l'invention.

Le dispositif d'actionnement 40 comporte un boîtier 42 dans lequel est logé un mécanisme 44 comportant un piston 46 apte à effectuer un mouvement de translation entre une première position illustrée à la figure 5 et une deuxième position illustrée à la figure 6. De manière analogue au premier mode de réalisation, le mécanisme 44 comporte un maneton 48 et un axe 50. Le boîtier 42 comporte deux logements 542, 544 disposés respectivement de chaque côté du mécanisme 44, et aptes à recevoir chacun une partie du piston 46 lors de son mouvement en translation.

Selon le deuxième mode de réalisation, chacun de ces logements 542, 544 comporte des moyens d'isolation thermique 56 de manière à former deux logements calorifugés 542, 544.

Le dispositif d'actionnement 40 comporte deux ressorts à spires 602, 604 réalisés en alliage à mémoire de forme double sens qui actionnent le piston 46 dans son mouvement en translation. Chaque ressort à spires 602, 604 comporte une extrémité fixée sur celle des deux extrémités du piston 46 qui se déplace dans le logement calorifugé 542, 544 dans lequel il se trouve, tandis que l'autre extrémité de ce ressort à spires 602, 604 est fixée à une paroi du logement calorifugé 542, 544 qui fait face à l'extrémité du piston 46. Chaque ressort à spires 602, 604 est ainsi apte à se comprimer et à se dilater suivant une direction parallèle à celle de la trajectoire du piston 46. Chaque ressort à spires 602, 604 se dilate lorsque l'autre ressort à spires 604, 602 se comprime, et il se comprime lorsque l'autre ressort à spires 604, 602 se dilate.

Le premier logement calorifugé 542 est porté à une première température donnée θ1 ou à une deuxième température donnée θ2 par des premiers moyens de régulation de température 622, 642, 662, 682 comportant un conduit de liaison 622, une vanne de régulation 642, un premier conduit d'alimentation 662 et un deuxième conduit d'alimentation 682.

Le deuxième logement calorifugé 544 est porté à une troisième température donnée θ3 ou à une quatrième température donnée θ4 par des deuxièmes moyens de régulation de température 624, 644, 664, 684 comportant un conduit de liaison 624, une vanne de régulation 644, un premier conduit d'alimentation 664 et un deuxième conduit d'alimentation 684.

Ces conduits d'alimentation 662, 682, 664, 684 sont reliés à des sources de fluide analogues à celles décrites pour le premier mode de réalisation du dispositif d'actionnement. Les critères de sélection de l'alimentation des vannes de régulation 642, 644 sont identiques à ceux décrits pour le premier mode de réalisation.

Le fonctionnement du dispositif d'actionnement 40 selon le deuxième mode de réalisation est le suivant.

Le premier ressort à spires 602 disposé dans le premier logement calorifugé 542 est réalisé dans un alliage à mémoire de forme double sens qui est sélectionné de telle façon qu'il se trouve dans son premier état stable lorsqu'il est porté à la première température donnée θ1 et qu'il se trouve dans son deuxième état stable lorsqu'il est porté à la deuxième température donnée θ2. Le premier état stable de l'alliage à mémoire de forme constitutif du ressort 602 correspond à un état dans lequel le ressort 602 est détendu (figure 5), tandis que son deuxième état stable correspond à un état dans lequel le ressort 602 est comprimé (figure 6).

Le deuxième ressort à spires 604 disposé dans le deuxième logement calorifugé 544 est réalisé dans un alliage à mémoire de forme double sens qui est sélectionné de telle façon qu'il se trouve dans son premier état stable lorsqu'il est porté à la troisième température donnée θ3 et qu'il se trouve dans son deuxième état stable lorsqu'il est porté à la quatrième température donnée θ4. Le premier état stable de l'alliage à mémoire de forme constitutif du ressort 604 correspond à un état dans lequel le ressort 604 est comprimé (figure 5), tandis que son deuxième état stable correspond à un état dans lequel le ressort 604 est détendu (figure 6).

Ainsi, dans une première configuration (figure 5), le premier logement calorifugé 542 reçoit un fluide à la première température donnée θ1. Le premier ressort 602 en alliage à mémoire de forme double sens est alors automatiquement porté à la première température donnée θ1, il se place dans son premier état stable, qui correspond à une dilatation sur l'exemple illustré, et s'y maintient puisque le premier logement 542 est calorifugé. Simultanément, le deuxième logement calorifugé 544 reçoit un fluide à la troisième température donnée θ3. Le deuxième ressort 604 en alliage à mémoire de forme double sens est alors automatiquement porté à la troisième température donnée θ3, il se place dans son premier état stable, qui correspond à une compression sur l'exemple illustré, et s'y maintient puisque le deuxième logement 544 est calorifugé. La combinaison de la dilatation du premier ressort 602 et de la compression du deuxième ressort 604 a pour effet de pousser dans un premier sens le piston 46 qui entraîne le maneton 48 en rotation jusqu'à une première position extrême.

De manière symétrique, dans une deuxième configuration (figure 6), le premier logement calorifugé 542 reçoit un fluide à la deuxième température donnée θ2. Le deuxième ressort 604 en alliage à mémoire de forme double sens est alors automatiquement porté à la deuxième température donnée θ2, il se place dans son deuxième état stable, qui correspond à une compression sur l'exemple illustré, et s'y maintient puisque le premier logement 542 est calorifugé. Simultanément, le deuxième logement calorifugé 544 reçoit un fluide à la quatrième température donnée θ4. Le deuxième ressort 604 en alliage à mémoire de forme double sens est alors automatiquement porté à la quatrième température donnée θ4, il se place dans son deuxième état stable, qui correspond à une dilatation sur l'exemple illustré, et s'y maintient puisque le deuxième logement 544 est calorifugé. La combinaison de la compression du premier ressort 602 et de la dilatation du deuxième ressort 604 a pour effet de pousser dans un deuxième sens le piston 46 qui entraîne le maneton 48 en rotation jusqu'à une deuxième position extrême.

De manière analogue au premier mode de réalisation, l'amenée du piston 46 dans sa première ou sa deuxième position extrême provoque l'ouverture ou la fermeture dudit volet.

De manière préférée, le fluide utilisé est de l'air. De manière avantageuse, cet air est prélevé au niveau du compresseur à basse pression 10 ou au niveau du compresseur à haute pression 12, tous ces éléments étant représentés sur la figure 2.

Selon une première forme de réalisation, la première source de fluide est l'une parmi l'entrée et la sortie du compresseur basse pression 10 tandis que la deuxième source de fluide est l'autre parmi l'entrée et la sortie du compresseur basse pression 10. Selon une deuxième forme de réalisation, la première source de fluide est l'une parmi l'entrée et la sortie du compresseur haute pression 12 tandis que la deuxième source de fluide est l'autre parmi l'entrée et la sortie du compresseur haute pression 12.

Selon une forme préférée du deuxième mode de réalisation, les deux ressorts en alliage à mémoire de forme sont sélectionnés de telle sorte que la température du premier état stable de l'un soit identique à la température du deuxième état stable de l'autre, et vice versa. Avec cette forme de réalisation préférée, il est possible de réaliser un circuit d'alimentation très simple à mettre en oeuvre, dans lequel, par exemple :
- le fluide à la première température donnée θ1 est de l'air prélevé à l'entrée du compresseur haute pression 12,
- le fluide à la deuxième température donnée θ2 est de l'air prélevé à la sortie du compresseur haute pression 12,
- le fluide à la troisième température donnée θ3 est de l'air prélevé à la sortie du compresseur haute pression 12, et dans ce cas les deux températures θ3 et θ2 sont identiques,
- le fluide à la quatrième température donnée θ4 est de l'air prélevé à l'entrée du compresseur haute pression 12, et dans ce cas les deux températures θ4 et θ1 sont identiques.

Un avantage important d'un dispositif d'actionnement 40 selon l'invention réside dans le fait qu'il met en oeuvre des alliages à mémoire de forme double sens qui sont aptes à passer dans l'un ou dans l'autre de leurs deux états stables lorsque le logement calorifugé dans lequel ils se trouvent est porté à une température donnée θ1, θ2, θ3, θ4 par un fluide provenant d'une source de fluide appropriée se trouvant elle-même dans le turboréacteur 2. Le paramètre significatif n'est pas la pression du fluide prélevé, mais la température de ce fluide à l'endroit où il est prélevé. Ainsi il est possible de mettre en oeuvre des circuits de transport de ce fluide qui sont beaucoup plus simples et légers que des circuits de fluide comprimés destinés à l'alimentation des vérins hydrauliques de la technique conventionnelle.

L'invention qui vient d'être décrite n'est pas limitée aux modes de réalisation qui ont été décrits. Par exemple, l'actionneur 60, 602, 604 en alliage à mémoire de forme peut être un ressort à lame plutôt qu'un ressort à spires. En outre, le circuit d'alimentation dans lequel le fluide est de l'air prélevé à l'entrée et à la sortie du compresseur à haute pression 12 est particulièrement adapté à l'actionnement de volets de décharge qui sont disposés dans le compartiment interveine 8 juste en amont du compresseur à haute pression 12. D'autres circuits d'alimentation peuvent être envisagé lorsque le(s) volet(s) à actionner sont disposés à d'autres endroits du turboréacteur 2. Dans ce cas, le fluide utilisé pourrait être de l'air prélevé au niveau du compresseur à basse pression 10.

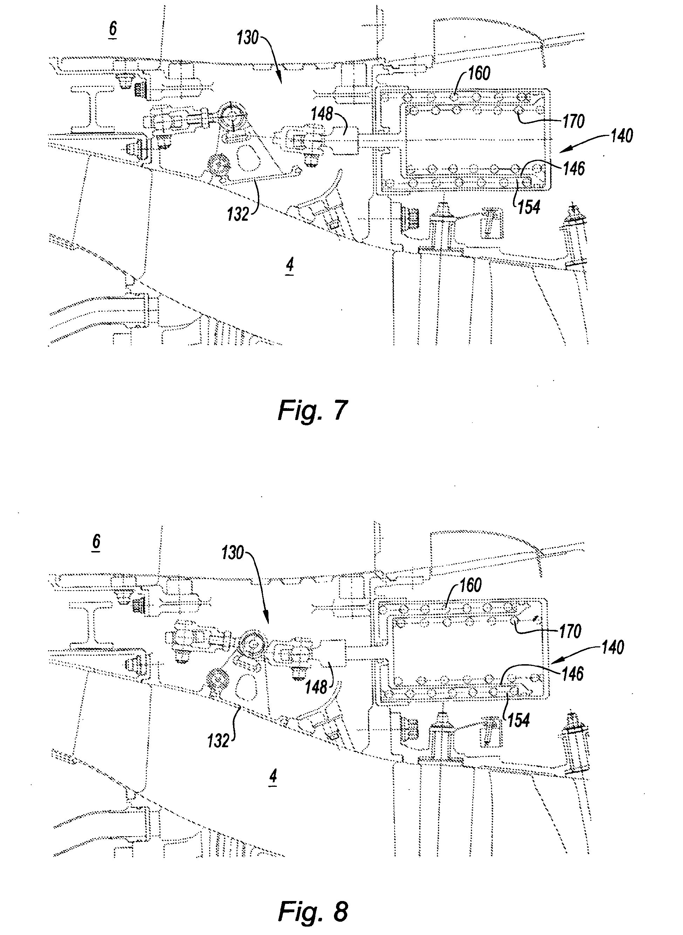

On a représenté sur les figures 7 et 8 l'application d'un actionneur conforme à l'invention à l'ouverture d'une vanne de décharge dans le moteur de la figure 1. L'actionneur 140 comprend à l'intérieur d'une enceinte 154 calorifugée, un ressort en alliage à mémoire de forme a double sens 160 qui agit sur un piston 146. Un ressort de rappel 170 classique, sans propriété de mémoire de forme, exerce un effort sur le piston dans le sens opposé à celui exercé par le ressort 160. Le piston 148 est relié au volet 132 par une bielle et un mécanisme de transformation de mouvement approprié. Les sources de fluide à différentes températures n'ont pas été représentées. Sur la figure 7 le ressort 160 est, à une première température, dans son état en extension, le ressort de rappel 170 étant comprimé. Le volet 132 est ouvert. Sur la figure 8, le ressort est à une deuxième température, dans son état comprimé, le volet 132 est fermé.

## Revendications

1. Dispositif d'actionnement d'un volet dans un moteur à turbine à gaz (40) comportant au moins un actionneur (60) réalisé en un alliage à mémoire de forme, l'actionneur étant à double sens possédant un premier état stable à une première température donnée (θ1, θ3) dans lequel il actionne l'une parmi l'ouverture et la fermeture du volet, et un deuxième état stable à une deuxième température donnée (θ2, θ4) dans lequel il actionne l'autre parmi l'ouverture et la fermeture dudit volet, et des moyens de régulation de température (62, 64, 66, 68) pour amener l'actionneur (60) en alliage à mémoire de forme à la première température donnée (θ1, θ3) ou à la deuxième température donnée (θ2, θ4) **caractérisé par le fait que** le dispositif comporte une vanne de régulation (64) et un conduit de liaison (62) raccordé à la vanne de régulation (64), ainsi qu'un premier conduit d'alimentation (66) raccordé à une première source d'un fluide porté à la première température donnée (θ1, θ3) et un deuxième conduit d'alimentation (68) raccordé à une deuxième source d'un fluide porté à la deuxième température donnée (θ2, θ4), les premier et deuxième conduits d'alimentation (66, 68) étant raccordés à la vanne de régulation (64).

2. Dispositif d'actionnement (40) selon la revendication 1, comportant, en outre, au moins un logement calorifugé (54) dans lequel est disposé l'actionneur (60) en alliage à mémoire de forme

3. Dispositif d'actionnement (40) selon la revendication 1 ou 2, dont le conduit de liaison (62) débouche dans le logement calorifugé (54).

4. Dispositif d'actionnement (40) selon la revendication 1, 2 ou 3, comportant un unique actionneur (60) en alliage à mémoire de forme double sens qui passe à un premier état stable lorsqu'il est amené à la première température donnée (θ1) et à un deuxième état stable lorsqu'il est amené à la deuxième température donnée (θ2).

5. Dispositif d'actionnement (40) selon l'une quelconque des revendications 1 à 4, comportant :
- un premier actionneur (602) en alliage à mémoire de forme double sens qui passe à un premier état stable lorsqu'il est amené à sa première température donnée (θ1) et qui passe à un deuxième état stable lorsqu'il est amené à sa deuxième température donnée (θ2),
- un deuxième actionneur (604) en alliage à mémoire de forme double sens qui passe à un premier état stable lorsqu'il est amené à sa première température donnée (θ3) et qui passe à un deuxième état stable lorsqu'il est amené à sa deuxième température donnée (θ4).

6. Dispositif d'actionnement (40) selon la revendication 5, dont la première température donnée (θ3) du deuxième actionneur (604) est sensiblement identique à la deuxième température donnée (θ2) du premier actionneur (602) et la deuxième température donnée (θ4) du deuxième actionneur (604) est sensiblement identique à la première température donnée (θ1) du premier actionneur (602), de sorte que le premier état stable du deuxième actionneur (604) est identique au deuxième état stable du premier actionneur (602) et que le deuxième état stable du deuxième actionneur (604) est identique au premier état stable du premier actionneur (602).

7. Dispositif d'actionnement (40) selon l'une quelconque des revendications 1 à 6, dont l'actionneur (60, 602, 604) est un ressort à spires.

8. Dispositif d'actionnement (40) selon l'une quelconque des revendications 1 à 6, dont l'actionneur (60, 602, 604) est un ressort à lame.

9. Utilisation du dispositif d'actionnement (40) selon l'une des revendications 1 à 8, pour actionner l'ouverture et la fermeture d'au moins un volet dans un moteur à turbine à gaz (2), le moteur comportant au moins un élément traversé par un écoulement de fluide et ayant une entrée au niveau de laquelle le fluide est à une température d'entrée donnée et une sortie au niveau de laquelle le fluide est à une température de sortie donnée, dont la première source de fluide est constituée par l'une de l'entrée ou la sortie tandis que la deuxième source de fluide est constituée par l'autre de l'entrée et de la sortie.

10. Utilisation du dispositif d'actionnement (40) selon la revendication 9, ledit élément étant un compresseur (10, 12) du moteur (2), la première température donnée (θ1, θ3) est la température de l'air à l'entrée du compresseur (10, 12) et la deuxième température donnée (θ2, θ4) est la température de l'air à la sortie du compresseur (10, 12)..

11. Utilisation du dispositif d'actionnement (40) selon la revendication 10, dont ledit élément est une turbine (14, 16) du moteur, la première température donnée (θ1, θ3) est la température de l'air à la sortie de la turbine (14, 16) et la deuxième température donnée (θ2, θ4) est la température de l'air à l'entrée de la turbine (14, 16).

12. Turboréacteur (2) comportant une veine primaire d'écoulement d'air (4), avec une veine secondaire d'écoulement d'air (6), et un système de décharge avec au moins un volet de décharge permettant de dériver de l'air de la veine primaire (4) vers la veine secondaire (6), et au moins un dispositif d'actionnement (40 ; 140) selon l'une quelconque des revendications 1 à 8, pour ouvrir ou fermer le volet de décharge.

13. Turboréacteur (2) selon la revendication 12, comportant au moins un élément (10, 12, 16, 18) traversé par un écoulement de fluide et ayant une entrée au niveau de laquelle l'écoulement de fluide est à une température d'entrée donnée et une sortie au niveau de laquelle l'écoulement de fluide est à une température de sortie donnée, **caractérisé par le fait qu'**il comporte au moins un dispositif d'actionnement (40 ;140) comportant une vanne de régulation (64) alimentée par un premier conduit d'alimentation (66) raccordé à l'une parmi l'entrée et la sortie dudit élément (10, 12, 16, 18) et par un deuxième conduit d'alimentation (68) raccordé à l'autre parmi l'entrée et la sortie dudit élément (10, 12, 16, 18), et en ce que la vanne de régulation (64) est commandée par un calculateur recevant des données relatives au cycle de fonctionnement du turboréacteur (2).

## Claims

1. An actuating device (40) of a shutter in a gas turbine engine comprising at least one actuator made of a shape memory alloy, **characterized by** the fact that said actuating device the actuator being a two-way actuator having a first stable state at a first given temperature (θ1, θ2), in which state it actuates either the opening or the closing of the shutter, and a second stable state at a second given temperature (θ2, θ4) in which state it actuates the other one of the closing or opening of said shutter, respectively, and temperature regulating (62, 64, 66, 68) means for bringing the shape memory alloy actuator (60) to the first given temperature (θ1, θ3) or to the second given temperature (θ2, θ4), **characterized by** the fact that said actuating device comprises a regulating valve (64) and a connecting pipe (62) connected to the regulating valve (64) and a first feed pipe (66) connected to a first source of a fluid brought to the first given temperature (θ1, θ3) and a second feed pipe (68) connected to a second source of a fluid brought to the second given temperature (θ2, θ4), the first and second feed pipes (66, 68) being connected to the regulating valve (64).

2. The actuating device (40) as claimed in claim 1, further comprising at least one heat insulated housing (54) in which the shape memory alloy actuator (60) is positioned.

3. The actuating device (40) as claimed in claim 1 or 2, in which the connecting pipe (62) opens into the heat insulated housing (54).

4. The actuating device (40) as claimed in claim 1, 2 or 3, comprising a single two-way shape memory alloy actuator (60) which switches to a first stable state when brought to the first given temperature (θ1) and to a second stable state when brought to the second given temperature (θ2).

5. The actuating device (40) as claimed in any one of claims 1 to 4, comprising:
- a first two-way shape memory alloy actuator (602), which switches to a first stable state when brought to its first given temperature (θ1) and which switches to a second stable state when brought to its second given temperature (θ2),
- a second two-way shape memory alloy actuator (604) which switches to a first stable state when brought to its first given temperature (θ3) and which switches to a second stable state when brought to its second given temperature (θ4).

6. The actuating device (40) as claimed in claim 5, in which the first given temperature (θ3) of the second actuator (604) is substantially identical to the second given temperature (θ2) of the first actuator (602) and the second given temperature (θ4) of the second actuator (604) is substantially identical to the first given temperature (θ1) of the first actuator (602), so that the first stable state of the second actuator (604) is identical to the second stable state of the first actuator (602) and so that the second stable state of the second actuator (604) is identical to the first stable state of the first actuator (602).

7. The actuating device (40) as claimed in any one of claims 1 to 6, in which the actuator (60, 602, 604) is a coil spring.

8. The actuating device (40) as claimed in any one of claims 1 to 6, in which the actuator (60, 602, 604) is a leaf spring.

9. The use of the actuating device (40) as claimed in one of claims 1 to 8 for opening and closing at least one shutter in a gas turbine engine (2), the engine comprising at least one element through which a fluid flow passes and having an inlet where the fluid is at a given inlet temperature and an outlet where the fluid is at a given outlet temperature, in which the first source of fluid consists of either the inlet or the outlet while the second source of fluid consists of either the outlet or the inlet, respectively.

10. The use of the actuating device (40) as claimed in claim 9, said element being a compressor (10, 12) of the engine (2), the first given temperature (θ1, θ3) is the air temperature at the inlet to the compressor (10, 12) and the second given temperature (θ2, θ4) is the air temperature at the outlet from the compressor (10, 12).

11. The use of the actuating device (40) as claimed in claim 10, in which said element is a turbine (14, 16) of the engine, the first given temperature (θ1, θ3) is the air temperature at the outlet from the turbine (14, 16) and the second given temperature (θ2, θ4) is the air temperature at the inlet to the turbinen (14, 16).

12. A turbojet engine (2) comprising a primary air (4) flow duct with a secondary air (6) flow duct and a bypass air bleed system with at least one bypass air bleed shutter allowing air to be diverted from the primary duct (4) to the secondary duct (6), and at least one actuating device (40 ; 140) as claimed in any one of claims 1 to 8 for opening or closing the bypass air bleed shutter.

13. The turbojet engine (2) as claimed in claim 12, comprising at least one element (10, 12, 16, 18) through which a fluid flow passes and having an inlet where the fluid flow is at a given inlet temperature and an outlet where the fluid flow is at a given outlet temperature, and which comprises at least one actuating device (40 ; 140) comprising a regulating valve (64) fed via a first feed pipe (66) connected to either the inlet or outlet of said element (10, 12, 16, 18) and by a second feed pipe (68) connected to either the outlet or the inlet of said element (10, 12, 16, 18), respectively, wherein the regulating valve (64) is controlled by a computer that receives data relating to the operating cycle of the turbojet engine (2).

## Patentansprüche

1. Vorrichtung (40) zum Betätigen einer Klappe in einem Gasturbinentriebwerk, umfassend mindestens ein Stellglied (60), das aus einer Formgedächtnislegierung ausgebildet ist, wobei das Stellglied zweiwegig ist und einen ersten Zustand, der auf einer ersten gegebenen Temperatur (θ1, θ3) stabil ist, in dem es das eine von der Öffnung und der Schließung der Klappe betätigt, und einen zweiten Zustand, der auf einer zweiten gegebenen Temperatur (θ2, θ4) stabil ist, in dem es das andere von der Öffnung und der Schließung der Klappe betätigt, besitzt, und Temperaturregelungsmittel (62, 64, 66, 68), um das Stellglied (60) aus Formgedächtnislegierung auf die erste gegebene Temperatur (θ1, θ3) oder auf die zweite gegebene Temperatur (θ2, θ4) zu bringen,
**dadurch gekennzeichnet, dass** die Vorrichtung ein Regelventil (64) und eine Verbindungsleitung (62), die an das Regelventil (64) angeschlossen ist, sowie eine erste Versorgungsleitung (66), die an eine erste Quelle eines Fluids, das auf die erste gegebene Temperatur (θ1, θ3) gebracht wird, angeschlossen ist, und eine zweite Versorgungsleitung (68), die an eine zweite Quelle eines Fluids, das auf die zweite gegebene Temperatur (θ2, θ4) gebracht wird, angeschlossen ist, umfasst, wobei die ersten und zweiten Versorgungsleitungen (66, 68) an das Regelventil (64) angeschlossen sind.

2. Betätigungsvorrichtung (40) nach Anspruch 1, ferner umfassend mindestens eine wärmeisolierte Aufnahme (54), in der das Stellglied (60) aus Formgedächtnislegierung angeordnet ist.

3. Betätigungsvorrichtung (40) nach Anspruch 1 oder 2, deren Verbindungsleitung (62) in die wärmeisolierte Aufnahme (54) einmündet.

4. Betätigungsvorrichtung (40) nach Anspruch 1, 2 oder 3, umfassend ein einziges Stellglied (60) aus Formgedächtnislegierung in Zweiwegausführung, das auf einen ersten stabilen Zustand übergeht, wenn es auf die erste gegebene Temperatur (θ1) gebracht wird, und auf einen zweiten stabilen Zustand übergeht, wenn es auf die zweite gegebene Temperatur (θ2) gebracht wird.

5. Betätigungsvorrichtung (40) nach einem der Ansprüche 1 bis 4, umfassend:
- ein erstes Stellglied (602) aus Formgedächtnislegierung in Zweiwegausführung, das auf einen ersten stabilen Zustand übergeht, wenn es auf seine erste gegebene Temperatur (θ1) gebracht wird, und das auf einen zweiten stabilen Zustand übergeht, wenn es auf seine zweite gegebene Temperatur (θ2) gebracht wird,
- ein zweites Stellglied (604) aus Formgedächtnislegierung in Zweiwegausführung, das auf einen ersten stabilen Zustand übergeht, wenn es auf seine erste gegebene Temperatur (θ3) gebracht wird, und auf einen zweiten stabilen Zustand übergeht, wenn es auf seine zweite gegebene Temperatur (θ4) gebracht wird.

6. Betätigungsvorrichtung (40) nach Anspruch 5, wobei die erste gegebene Temperatur (θ3) des zweiten Stellglieds (604) im Wesentlichen mit der zweiten gegebenen Temperatur (θ2) des ersten Stellglieds (602) identisch ist, und wobei die zweite gegebene Temperatur (θ4) des zweiten Stellglieds (604) im Wesentlichen mit der ersten gegebenen Temperatur (θ1) des ersten Stellglieds (602) identisch ist, so dass der erste stabile Zustand des zweiten Stellglieds (604) mit dem zweiten stabilen Zustand des ersten Stellglieds (602) identisch ist, und der zweite stabile Zustand des zweiten Stellglieds (604) mit dem ersten stabilen Zustand des ersten Stellglieds (602) identisch ist.

7. Betätigungsvorrichtung (40) nach einem der Ansprüche 1 bis 6, wobei das Stellglied (60, 602, 604) eine Spiralfeder ist.

8. Betätigungsvorrichtung (40) nach einem der Ansprüche 1 bis 6, wobei das Stellglied (60, 602, 604) eine Blattfeder ist.

9. Verwendung der Betätigungsvorrichtung (40) nach einem der Ansprüche 1 bis 8, um die Öffnung und die Schließung mindestens einer Klappe in einem Gasturbinentriebwerk (2) zu betätigen, wobei das Triebwerk mindestens ein Element umfasst, durch das eine Fluidströmung geht und das einen Eingang, an dem das Fluid sich auf einer gegebenen Eingangstemperatur befindet, und einen Ausgang, an dem das Fluid sich auf einer gegebenen Ausgangstemperatur befindet, aufweist, wobei die erste Fluidquelle von einem des Eingangs oder des Ausgangs gebildet wird, während die zweite Fluidquelle von dem anderen des Eingangs und des Ausgangs gebildet wird.

10. Verwendung der Betätigungsvorrichtung (40) nach Anspruch 9, wobei das Element ein Kompressor (10, 12) des Triebwerks (2) ist, wobei die erste gegebene Temperatur (θ1, θ3) die Temperatur der Luft am Eingang des Kompressors (10, 12) ist und die zweite gegebene Temperatur (θ2, θ4) die Temperatur der Luft am Ausgang des Kompressors (10, 12) ist.

11. Verwendung der Betätigungsvorrichtung (40) nach Anspruch 10, wobei das Element eine Turbine (14, 16) des Triebwerks ist, wobei die erste gegebene Temperatur (θ1, θ3) die Temperatur der Luft am Ausgang der Turbine (14, 16) ist und die zweite gegebene Temperatur (θ2, θ4) die Temperatur der Luft am Eingang der Turbine (14, 16) ist.

12. Turboluftstrahltriebwerk (2), umfassend eine Luftströmungshauptader (4) mit einer Luftströmungsnebenader (6) und einem Ablasssystem mit mindestens einer Ablassklappe, die es ermöglicht Luft von der Hauptader (4) zur Nebenader (6) abzuleiten, und mindestens eine Betätigungsvorrichtung (40; 140) nach einem der Ansprüche 1 bis 8, um die Ablassklappe zu öffnen oder zu schließen.

13. Turboluftstrahltriebwerk (2) nach Anspruch 12, mindestens umfassend ein Element (10, 12, 16, 18), durch das eine Fluidströmung geht und das einen Eingang aufweist, an dem die Fluidströmung sich auf einer gegebenen Eingangstemperatur befindet, und einen Ausgang, an dem die Fluidströmung sich auf einer gegebenen Ausgangstemperatur befindet, aufweist, **dadurch gekennzeichnet, dass** es mindestens eine Betätigungsvorrichtung (40 ; 140) umfasst, die ein Regelventil (64) umfasst, das von einer ersten Versorgungsleitung (66), die an den einen von dem Eingang und dem Ausgang des Elements (10, 12, 16, 18) angeschlossen ist, und von einer zweiten Versorgungsleitung (68), die an den anderen von dem Eingang und dem Ausgang des Elements (10, 12, 16, 18) angeschlossen ist, versorgt wird, und dass das Regelventil (64) von einem Rechner gesteuert wird, der Daten über den Betriebszyklus des Turboluftstrahltriebwerks empfängt.
